(19) 

**Europäisches Patentamt**
**European Patent Office**
**Office européen des brevets**

(11) **EP 4 546 492 A1**

(12) **EUROPEAN PATENT APPLICATION**
published in accordance with Art. 153(4) EPC

(43) Date of publication:
**30.04.2025 Bulletin 2025/18**

(21) Application number: **23912845.7**

(22) Date of filing: **25.12.2023**

(51) International Patent Classification (IPC):
$H01M\ 10/0567^{(2010.01)}$     $H01M\ 10/42^{(2006.01)}$
$H01M\ 10/0569^{(2010.01)}$     $H01M\ 10/058^{(2010.01)}$
$H01M\ 10/052^{(2010.01)}$      $H01M\ 4/38^{(2006.01)}$
$H01M\ 4/48^{(2010.01)}$        $H01M\ 4/525^{(2010.01)}$
$H01M\ 4/505^{(2010.01)}$       $H01M\ 4/02^{(2006.01)}$

(52) Cooperative Patent Classification (CPC):
**H01M 4/02; H01M 4/38; H01M 4/48; H01M 4/505;**
**H01M 4/525; H01M 10/052; H01M 10/0567;**
**H01M 10/0569; H01M 10/058; H01M 10/42;**
**Y02E 60/10**

(86) International application number:
**PCT/KR2023/021519**

(87) International publication number:
**WO 2024/144170 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.12.2022  KR 20220187442**
**22.12.2023  KR 20230189447**

(71) Applicant: **LG Energy Solution, Ltd.**
**Seoul 07335 (KR)**

(72) Inventors:
• **KIM, Eun Bee**
**Daejeon 34122 (KR)**
• **HONG, Yeon Suk**
**Daejeon 34122 (KR)**

(74) Representative: **Hoffmann Eitle**
**Patent- und Rechtsanwälte PartmbB**
**Arabellastraße 30**
**81925 München (DE)**

(54) **LITHIUM SECONDARY BATTERY COMPRISING ELECTROLYTE**

(57)     The present application relates to a lithium secondary battery including an electrolyte.

[Figure 1]

**Description**

[Technical Field]

This application claims priority to and the benefit of Korean Patent Application No. 10-2022-0187442 filed in the Korean Intellectual Property Office on December 28, 2022, the entire contents of which are incorporated herein by reference.
The present application relates to a lithium secondary battery including an electrolyte.

[Background Art]

Demands for the use of alternative energy or clean energy are increasing due to the rapid increase in the use of fossil fuels, and as a part of this trend, the most actively studied field is a field of electricity generation and electricity storage using an electrochemical reaction.
Currently, representative examples of an electrochemical device using such electrochemical energy include a secondary battery, and the usage areas thereof are increasing more and more.
As technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, as an electrode for such a high capacity lithium secondary battery, studies have been actively conducted on a method for preparing a high-density electrode having a higher energy density per unit volume.
In general, a secondary battery is composed of a positive electrode, a negative electrode, an electrolyte, and a separator. The negative electrode includes a negative electrode active material which intercalates and de-intercalates lithium ions from the positive electrode, and a carbon-based material such as graphite has excellent stability and reversibility as a negative electrode material, but there are limitations in terms of capacity, so that in the field of achieving high capacity, there are increasing attempts to use a Si-based material with high theoretical capacity as a negative electrode material.
That is, lithium secondary batteries are typically manufactured using lithium-intercalated compounds such as $LiCoO_2$ and $LiMn_2O_4$ for the positive electrode, and non-lithium-intercalated materials such as carbon-based and Si-based materials for the negative electrode, and during charging, lithium ions intercalated into the positive electrode move to the negative electrode through the electrolyte solution, and during discharging, the lithium ions move from the negative electrode to the positive electrode again. Lithium, which moves from the positive electrode to the negative electrode during the charging reaction, reacts with the electrolyte solution to form a solid electrolyte interface (SEI) which is a type of passivation film on the surface of the negative electrode. This SEI may stabilize the structure of the negative electrode by suppressing the movement of electrons required for the reaction between the negative electrode and the electrolyte solution to prevent electrolyte decomposition reactions, but since the reaction is an irreversible reaction, lithium ions are consumed. That is, the lithium consumed due to the formation of SEI does not return to the positive electrode during the subsequent discharge process, thereby reducing the capacity of the battery.
Meanwhile, in an effort to improve the performance of lithium secondary batteries, there is a need for developing the technology which increases a charging speed. Since the movement speed of lithium ions needs to be fast during the process of intercalating the lithium ions into the negative electrode in order to quickly charge a lithium secondary battery, a negative electrode active material layer is formed as thick as a thin film to reduce the diffusion distance of lithium, and a carbon coating layer is formed on the surface to increase conductivity and reduce internal resistance, thereby designing a battery which achieves high output.
However, it is difficult to implement high capacity using a negative electrode including such a thin film negative electrode active material layer. Further, it is difficult to implement rapid charging using a negative electrode that implements high capacity. In addition, when a silicon-based negative electrode is used, the Si content of the negative electrode is increased due to the increase in energy density, and accordingly, to reduce the efficiency of the positive electrode of a high Ni, which is the material for the positive electrode, an excessive amount of sacrificial positive electrode material is applied to achieve the balance with the negative electrode, but in this case, the amount of gas in the battery cell itself increases and the resulting stability problem is emerging.
Therefore, there is a need for research capable of maintaining cell resistance, improving high-temperature cycle performance, and reducing the amount of gas generated during storage while using a negative electrode including a silicon-based active material for high capacity.

<Related Art Document>

(Patent Document 1) Japanese Patent Application Laid-Open No. 2009-080971

[Detailed Description of the Invention]

[Technical Problem]

As a result of research on the above-described problems, when using a silicon-based negative electrode to secure capacity characteristics and rapid charging performance and simultaneously include an additive with a predetermined composition and content in the electrolyte, a method capable of maintaining cell resistance, improving high-temperature cycle performance and reducing the amount of gas generated during storage has been obtained.

Accordingly, the present application relates to a lithium secondary battery including a silicon-based negative electrode; and an electrolyte including certain additives.

[Technical Solution]

An exemplary embodiment of the present specification provides a lithium secondary battery including: a positive electrode; a silicon-based negative electrode; a separator provided between the positive electrode and the negative electrode; and an electrolyte, in which the silicon-based negative electrode includes a negative electrode current collector layer; and a negative electrode active material layer provided on one surface or both surfaces of the negative electrode current collector layer, the negative electrode active material layer includes a negative electrode active material layer composition, the negative electrode active material layer composition includes a silicon-based active material, the silicon-based active material includes one or more selected from the group consisting of SiOx (x=0), SiOx (0<x<2), SiC, and a Si alloy, the electrolyte includes an additive, the additive includes a bifunctional electrolyte additive; and an additive including two or more fluoro groups, the bifunctional electrolyte additive includes a cyano group and a cumarin group as functional groups, and 45 parts by weight or more and 55 parts by weight or less of the bifunctional electrolyte additive; and 45 parts by weight or more and 55 parts by weight or less of the additive including two or more fluoro groups are included based on 100 parts by weight of the additive.

[Advantageous Effects]

The lithium secondary battery according to the present application can secure a battery with high capacity and high energy density using a silicon-based negative electrode, and can also secure rapid charging performance because the negative electrode is formed as thick as a thin film using a silicon-based active material with excellent capacity characteristics.

In particular, the lithium secondary battery according to the present application is characterized by including a specific additive in an electrolyte. Specifically, the electrolyte includes a bifunctional electrolyte additive which can serve to capture a Lewis acid produced by a solvent included in the electrolyte and to form a negative electrode film when the lithium secondary battery is driven. Furthermore, the electrolyte includes an additive including two or more fluoro groups as an additive, such that cell resistance can be maintained and simultaneously, high-temperature cycle performance can be improved.

As described above, it is characterized in that by including a specific additive in the electrolyte, it is possible to maintain the cell resistance when a lithium secondary battery is driven, and simultaneously improve high-temperature cycle performance and reduce the amount of gas generated during storage.

Further, the electrolyte according to the present application includes a bifunctional electrolyte additive having the characteristics and two or more fluoro groups as additives, and simultaneously includes 45 parts by weight or more and 55 parts by weight or less of the bifunctional electrolyte additive; and 45 parts by weight or more and 55 parts by weight or less of the additive including the two fluoro groups, based on 100 parts by weight of the additive. Accordingly, it is also characterized in that it is possible to maintain the cell resistance so as not to increase, and simultaneously prevent the electrolyte solution from being eluted.

[Brief Description of Drawings]

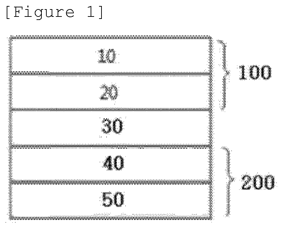

FIG. 1 is a view illustrating the lithium secondary battery according to the present application.

<Explanation of Reference Numerals and Symbols>

    10: Negative electrode current collector layer
    20: Negative electrode active material layer

30: Separator
40: Positive electrode active material layer
50: Positive electrode current collector layer
100: Negative electrode
200: Positive electrode

[Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less'.

In the present specification, "specific surface area" is measured by the BET method, and is specifically calculated from an amount of nitrogen gas adsorbed under liquid nitrogen temperature (77K) using BELSORP-mini II manufactured by BEL Japan, Inc. That is, in the present application, the BET specific surface area may mean a specific surface area measured by the measurement method.

In the present specification, "Dn" means the particle size distribution, and means the particle diameter at the n% point of the cumulative distribution of the number of particles according to the particle diameter. That is, D50 is the particle diameter at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Meanwhile, the particle size distribution may be measured using a laser diffraction method. Specifically, after a powder to be measured is dispersed in a dispersion medium, a particle size distribution is calculated by introducing the resulting dispersion into a commercially available laser diffraction particle size measurement device (for example, Microtrac S3500) to measure the difference in diffraction pattern according to the particle size when particles pass through the laser beam.

In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer'.

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described.

Hereinafter, the present invention will be described in detail with reference to drawings, such that a person with ordinary skill in the art to which the present invention pertains can easily carry out the present invention. However, the present invention can be implemented in various different forms, and is not limited to the following description.

An exemplary embodiment of the present specification provides a lithium secondary battery including: a positive electrode; a silicon-based negative electrode; a separator provided between the positive electrode and the negative electrode; and an electrolyte, in which the silicon-based negative electrode includes a negative electrode current collector layer; and a negative electrode active material layer provided on one surface or both surfaces of the negative electrode current collector layer, the negative electrode active material layer includes a negative electrode active material layer composition, the negative electrode active material layer composition includes a silicon-based active material, the silicon-based active material includes one or more selected from the group consisting of SiOx (x=0), SiOx (0<x<2), SiC, and a Si alloy, the electrolyte includes an additive, the additive includes a bifunctional electrolyte additive; and an additive including two or more fluoro groups, the bifunctional electrolyte additive includes a cyano group and a cumarin group as functional groups, and 45 parts by weight or more and 55 parts by weight or less of the bifunctional electrolyte additive; and 45 parts by weight or more and 55 parts by weight or less of the additive including two or more fluoro groups are included based on 100 parts by weight of the additive.

As described above, it is characterized in that by including a specific additive in the electrolyte, it is possible to maintain the cell resistance when a lithium secondary battery is driven, and simultaneously improve high-temperature cycle performance and reduce the amount of gas generated during storage.

FIG. 1 is a view illustrating the stacking structure of a lithium secondary battery according to an exemplary embodiment of the present application. Specifically, it is possible to confirm a negative electrode 100 including a negative electrode active material layer 20 on one surface of a negative electrode current collector layer 10 and to confirm a positive electrode 200 including a positive electrode active material layer 40 on one surface of a positive electrode current collector layer 50, and it is shown that the negative electrode 100 and the positive electrode 200 for a lithium secondary battery are formed in a structure in which the electrodes are stacked with a separator 30 interposed therebetween.

Hereinafter, each of the positive electrode, negative electrode, electrolyte, and separator included in the lithium secondary battery will be described.

An exemplary embodiment of the present application provides a lithium secondary battery, in which the electrolyte includes an additive, and the additive includes a bifunctional electrolyte additive; and an additive including two or more fluoro groups, and includes 45 parts by weight or more and 55 parts by weight or less of the bifunctional electrolyte additive; and 45 parts by weight or more and 55 parts by weight or less of the additive including the two fluoro groups, based on 100 parts by weight of the additive.

In particular, the lithium secondary battery according to the present application is characterized by including a specific additive in an electrolyte. Specifically, the electrolyte includes a bifunctional electrolyte additive which can serve to capture Lewis acid produced by a solvent included in the electrolyte and a bifunctional electrolyte additive which can serve to form a negative electrode film when the lithium secondary battery is driven. Furthermore, the electrolyte includes an additive including two or more fluoro groups as an additive, such that cell resistance can be maintained and simultaneously, high-temperature cycle performance can be improved.

An exemplary embodiment of the present application provides a lithium secondary battery, in which the bifunctional electrolyte additive includes at least a cyano group as a functional group.

In another exemplary embodiment, the bifunctional electrolyte additive may include at least a cyano group as a functional group, and specifically, the bifunctional electrolyte additive may include at least a cyano group or a coumarin group as a functional group, and more specifically, the bifunctional electrolyte additive may include a cyano group and a coumarin group as functional groups.

In an exemplary embodiment of the present application, the bifunctional electrolyte additive may be 6-cyano cumarin.

As a specific functional group is included as the functional group as described above, it is characterized in that it is possible to serve to capture a Lewis acid produced by a solvent included in the electrolyte and to form a negative electrode film.

An exemplary embodiment of the present application provides a lithium secondary battery, in which the additive including two or more fluoro groups is a lithium borate salt including two or more fluoro groups; or a lithium phosphate salt including two or more fluoro groups.

The additive including two or more fluoro groups is an additive capable of reducing the cell resistance, and serves to maintain the cell resistance and simultaneously improve the high-temperature cycle performance.

In an exemplary embodiment of the present application, the additive including two or more fluoro groups may include: lithium fluoromalonato(difluoro)borate; lithium difluorophosphate; or lithium difluorobis(oxalato)phosphate.

An exemplary embodiment of the present application provides a lithium secondary battery, in which the additive is included in an amount of 5 parts by weight or less based on 100 parts by weight of the electrolyte.

In another exemplary embodiment, the additive may be included in an amount of 5 parts by weight or less, preferably 4 parts by weight or less, and more preferably 3 parts by weight or less, and 0.5 parts by weight or more, specifically 1 part by weight or more, based on 100 parts by weight of the electrolyte.

An exemplary embodiment of the present application provides a lithium secondary battery, in which 45 parts by weight or more and 55 parts by weight or less of the bifunctional electrolyte additive; and 45 parts by weight or more and 55 parts by weight or less of the additive including two or more fluoro groups are included based on 100 parts by weight of the additive.

In another exemplary embodiment, the bifunctional electrolyte additive may be included in an amount of 45 parts by weight or more and 55 parts by weight or less, preferably 47 parts by weight or more and 53 parts by weight or less, based on 100 parts by weight of the additive.

In still another exemplary embodiment, the additive including two or more fluoro groups may be included in an amount of 45 parts by weight or more and 55 parts by weight or less, preferably 47 parts by weight or more and 53 parts by weight or more, based on 100 parts by weight of the additive.

In an exemplary embodiment of the present application, the additive includes a bifunctional electrolyte additive; and an additive including two or more fluoro groups, and the weight ratio of the electrolyte additive : the additive including two or more fluoro groups may be 1:0.8 to 1:1.2.

In another exemplary embodiment, the weight ratio of the electrolyte additive : the additive including two or more fluoro groups may satisfy 1:0.8 to 1:1.2, specifically 1:0.9 to 1:1.1, and more specifically 1:1.

The electrolyte according to the present application is characterized by including an additive having the composition and content. Accordingly, it is also characterized in that it is possible to maintain the cell resistance so as not to increase, and simultaneously prevent the electrolyte solution from being eluted. That is, when the weight ratio is out of the above ratio, the cell resistance becomes too high, and when the additive including two or more fluoro groups is used out of the above range due to its low solubility, it is characterized in that the performance of the lithium secondary battery deteriorates because the elution phenomenon in the electrolyte solution occurs.

An exemplary embodiment of the present application provides a lithium secondary battery, in which the electrolyte further includes one or more selected from the group consisting of a solvent; and a lithium salt.

As the solvent, it is possible to use, for example, an aprotic organic solvent, such as N-methyl-2-pyrrolidinone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

The present application provides a lithium secondary battery in which the solvent is a carbonate-based mixed solvent.

In particular, among the carbonate-based mixed solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

The lithium salt is a material which is easily dissolved in the non-aqueous electrolyte solution, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF3CF2 (CF3) 2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

The silicon-based negative electrode according to the present application may include: a negative electrode current collector layer; and a negative electrode active material layer provided on one surface or both surfaces of the negative electrode current collector layer.

The negative electrode current collector layer generally has a thickness of 1 $\mu$m to 100 $\mu$m. The negative electrode current collector is not particularly limited as long as the negative electrode current collector has high conductivity without causing a chemical change to the battery, and for example, it is possible to use copper, stainless steel, aluminum, nickel, titanium, fired carbon, copper or a material in which the surface of copper or stainless steel is surface-treated with carbon, nickel, titanium, silver, and the like, an aluminum-cadmium alloy, and the like. In addition, the negative electrode current collector may also increase the bonding strength of a negative electrode active material by forming fine irregularities on the surface thereof, and the negative electrode current collector may be used in various forms such as a film, a sheet, a foil, a net, a porous body, a foam body, and a non-woven fabric body.

However, the thickness may be variously modified depending on the type and use of the negative electrode used, and is not limited thereto.

In an exemplary embodiment of the present application, the negative electrode active material layer includes a negative electrode active material layer composition, and the negative electrode active material layer composition may include a silicon-based active material.

In an exemplary embodiment of the present application, the negative electrode active material layer includes a negative electrode active material layer composition, and the negative electrode active material layer composition may include one or more selected from the group consisting of a silicon-based active material; a negative electrode conductive material; and a negative electrode binder.

In an exemplary embodiment of the present application, the negative electrode active material layer includes a negative electrode active material layer composition, and the negative electrode active material layer composition may include: a silicon-based active material; a negative electrode conductive material; and a negative electrode binder.

In an exemplary embodiment of the present application, the silicon-based active material may include one or more selected from the group consisting of SiOx (x=0), SiOx (0<x<2), SiC, and a Si alloy.

In an exemplary embodiment of the present application, the silicon-based active material includes one or more selected from the group consisting of SiOx (x=0), SiOx (0<x<2) and metal impurities, and may include 70 parts by weight or more of the SiOx (x=0) based on 100 parts by weight of the silicon-based active material.

In another exemplary embodiment, the SiOx (x=0) may be included in an amount of 70 parts by weight or more, preferably 80 parts by weight or more, and more preferably 90 parts by weight or more, and may be included in an amount of 100 parts by weight or less, preferably 99 parts by weight or less, and more preferably 95 parts by weight or less, based on 100 parts by weight of the silicon-based active material.

In an exemplary embodiment of the present application, for the silicon-based active material, particularly, pure silicon (Si) may be used as the silicon-based active material. The use of pure silicon (Si) as the silicon-based active material may mean that based on the total 100 parts by weight of the silicon-based active material as described above, pure Si particles (SiOx (x=0)), which are not bound to other particles or elements, are included in the above range.

Meanwhile, the silicon-based active material of the present invention may have an average particle diameter (D50) of 5 μm to 10 μm, specifically 5.5 μm to 8 μm, and more specifically 6 μm to 7 μm. When the average particle diameter is less than 5 μm, the specific surface area of the particles increases excessively, resulting in an excessive increase in the viscosity of the negative electrode slurry. Accordingly, the particles constituting the negative electrode slurry are not smoothly dispersed. Furthermore, when the size of the silicon-based active material is excessively small, a composite composed of a conductive material and a binder in the negative electrode slurry makes a contact area between silicon particles and conductive materials reduced, so that the possibility of breaking the conductive network is increased, thereby decreasing the capacity retention rate. Meanwhile, when the average particle diameter is more than 10 μm, excessively large silicon particles are present, so that the surface of the negative electrode is not smooth, and accordingly, non-uniformity in current density occurs during charging and discharging. Further, when the silicon particles are excessively large, processability deteriorates because the phase stability of the negative electrode slurry becomes unstable. Accordingly, the capacity retention rate of the battery deteriorates.

In an exemplary embodiment of the present application, the silicon-based active material generally has a characteristic BET surface area. The BET surface area of the silicon-based active material is preferably 0.01 m²/g to 150.0 m²/g, more preferably 0.1 m²/g to 100.0 m²/g, particularly preferably 0.2 m²/g to 80.0 m²/g, and most preferably 0.2 m²/g to 18.0 m²/g. The BET surface area is measured by DIN 66131 (using nitrogen).

In an exemplary embodiment of the present application, the silicon-based active material may be present, for example, in a crystalline or amorphous form, and preferably is not porous. The silicon particles are preferably spherical or fragment-shaped particles. Alternatively but less preferably, the silicon particles may also have a fibrous structure or be present in the form of a film or coating including silicon.

In an exemplary embodiment of the present application, the silicon-based active material may be included in an amount of 60 parts by weight or more based on 100 parts by weight of the negative electrode active material layer composition.

In another exemplary embodiment, the silicon-based active material may be included in an amount of 60 parts by weight or more, preferably 65 parts by weight or more, and more preferably 70 parts by weight or more, and may be included in an amount of 95 parts by weight or less, preferably 90 parts by weight or less, and more preferably 80 parts by weight or less, based on 100 parts by weight of the negative electrode active material layer composition.

The negative electrode active material layer composition according to the present application has a feature in which by using a specific negative electrode conductive material and a specific negative electrode binder, which can suppress the volume expansion rate in the charging and discharging process even though a silicon-based active material having a remarkably high capacity is used in the above range, the performance of the negative electrode does not deteriorate and output characteristics at charging and discharging are excellent even though the above range is included.

In an exemplary embodiment of the present application, the silicon-based active material may have a non-circular form, and the circularity thereof is, for example, 0.9 or less, for example 0.7 to 0.9, for example, 0.8 to 0.9, and for example, 0.85 to 0.9.

In the present application, the circularity is determined by the following Equation 1, where A is the area and P is the boundary line.

[Equation 1]

$$4\pi A/P^2$$

In the related art, it was common to use only a graphite-based compound as a negative electrode active material, but recently, as the demand for a high-capacity battery has increased, attempts to mix and use a silicon-based compound have been increased in order to increase the capacity. However, in the case of the silicon-based compound, there is a limitation in that the volume rapidly expands in the process of charging/discharging to impair the conductive path formed in the negative electrode active material layer, consequently resulting in deterioration in the performance of the battery. Therefore, in an exemplary embodiment of the present application, the negative electrode active material layer composition may include a negative electrode conductive material and a negative electrode binder. That is, the negative electrode conductive material serves to secure a conductive path, and the binder serves to retain the negative electrode conductive material during charging and discharging.

In an exemplary embodiment of the present application, the negative electrode conductive material may include one or more selected from the group consisting of a dotted conductive material; a planar conductive material; and a linear conductive material.

In an exemplary embodiment of the present application, the dotted conductive material may be used to enhance the conductivity of the negative electrode, and is one that forms conductivity without inducing a chemical change and means a conductive material whose morphology is a circular or dotted type. Specifically, the dotted conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

In an exemplary embodiment of the present application, the dotted conductive material may have a BET specific surface area of 40 $m^2/g$ or more and 70 $m^2/g$ or less, preferably 45 $m^2/g$ or more and 65 $m^2/g$ or less, and more preferably 50 $m^2/g$ or more and 60 $m^2/g$ or less.

In an exemplary embodiment of the present application, the dotted conductive material may have a particle diameter of 10 nm to 100 nm, preferably 20 nm to 90 nm, and more preferably 40 nm to 60 nm.

In an exemplary embodiment of the present application, the conductive material may include a planar conductive material.

The planar conductive material means a conductive material which serves to increase the surface contact between silicon particles in the negative electrode to improve conductivity and simultaneously suppress the disconnection of the conductive path due to the volume expansion. The planar conductive material may be expressed as a plate-like conductive material or a bulk conductive material.

In an exemplary embodiment of the present application, the planar conductive material may include at least one selected from the group consisting of plate-like graphite, graphene, graphene oxide, and graphite flake, and may be preferably plate-like graphite.

In an exemplary embodiment of the present application, the planar conductive material may have an average particle diameter (D50) of 2 $\mu$m to 7 $\mu$m, specifically 3 $\mu$m to 6 $\mu$m, and more specifically 4 $\mu$m to 5 $\mu$m. When the average particle diameter satisfies the above range, sufficient particle size facilitates dispersion without causing an excessive increase in viscosity of the negative electrode slurry. Therefore, the dispersion effect is excellent when particles are dispersed using the same equipment and time.

In an exemplary embodiment of the present application, provided is a negative electrode composition in which the planar conductive material has a D10 of 0.5 $\mu$m or more and 1.5 $\mu$m or less, a D50 of 4.0 $\mu$m or more and 5.0 $\mu$m or less, and a D90 of 7.0 $\mu$m or more and 15.0 $\mu$m or less.

In an exemplary embodiment of the present application, as the planar conductive material, it is possible to use a high specific surface area planar conductive material having a high BET specific surface area; or a low specific surface area planar conductive material.

In an exemplary embodiment of the present application, as the planar conductive material, a high specific surface area planar conductive material; or a low specific surface area planar conductive material may be used without limitation, but in particular, the planar conductive material according to the present application may be affected by the dispersion to some extent in the electrode performance, so that it may be particularly desirable to use a low specific surface area planar conductive material that does not cause a problem in dispersion.

In an exemplary embodiment of the present application, the planar conductive material may have a BET specific surface area of 1 $m^2/g$ or more.

In another exemplary embodiment, the planar conductive material may have a BET specific surface area of 1 $m^2/g$ or more and 500 $m^2/g$ or less, preferably 5 $m^2/g$ or more and 300 $m^2/g$ or less, and more preferably 5 $m^2/g$ or more and 250 $m^2/g$ or less.

In still another exemplary embodiment, the planar conductive material is a high specific surface area planar conductive material, and the BET specific surface area may satisfy a range of 50 $m^2/g$ or more and 500 $m^2/g$ or less, preferably 80 $m^2/g$ or more and 300 $m^2/g$ or less, and more preferably 100 $m^2/g$ or more and 250 $m^2/g$ or less.

In yet another exemplary embodiment, the planar conductive material is a low specific surface area planar conductive material, and the BET specific surface area may satisfy a range of 1 $m^2/g$ or more and 40 $m^2/g$ or less, preferably 5 $m^2/g$ or more and 30 $m^2/g$ or less, and more preferably 5 $m^2/g$ or more and 25 $m^2/g$ or less.

As other conductive materials, there may be a linear conductive material such as carbon nanotubes. The carbon nanotubes may be bundle type carbon nanotubes. The bundle type carbon nanotubes may include a plurality of carbon nanotube units. Specifically, the term 'bundle type' used herein, unless otherwise specified, refers to a secondary shape in the form of a bundle or rope in which the plurality of carbon nanotube units is aligned side by side in an alignment where longitudinal axes of the carbon nanotube units are substantially the same or intertwined. In the carbon nanotube unit, a graphite sheet has a cylindrical shape with a nano-sized diameter and has an sp2 bond structure. In this case, the carbon nanotube unit may exhibit characteristics of a conductor or semiconductor depending on a structure and an angle at which the graphite sheet is rolled. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

In an exemplary embodiment of the present application, the negative electrode conductive material includes a linear conductive material, and the linear conductive material may be a carbon nanotube.

In an exemplary embodiment of the present application, the carbon nanotube may be SWCNT or/and MWCNT. When the linear conductive material is SWCNT, the SWCNT may have a length of 0.5 $\mu$m to 100 $\mu$m, preferably 1 $\mu$m to 80 $\mu$m.

In an exemplary embodiment of the present application, the negative electrode conductive material may be included in an amount of 5 parts by weight or more and 40 parts by weight or less based on 100 parts by weight of the negative electrode active material layer composition.

In another exemplary embodiment, the negative electrode conductive material may be included in an amount of 5 parts by weight or more and 40 parts by weight or less, preferably 5 parts by weight or more and 30 parts by weight or less, and more preferably 5 parts by weight or more and 25 parts by weight or less, based on 100 parts by weight of the negative electrode active material layer composition.

In an exemplary embodiment of the present application, the negative electrode conductive material includes a planar conductive material and a linear conductive material, and the ratio of the planar conductive material : the linear conductive material may satisfy 1:0.001 to 1:0.3.

In an exemplary embodiment of the present application, as the negative electrode conductive material includes a planar conductive material and a linear conductive material and each satisfies the composition and ratio, the negative electrode conductive material has a feature in which output characteristics at high C-rate are excellent because the service life characteristics of the existing lithium secondary battery are not greatly affected and points where the battery can be charged and discharged are increased.

The negative electrode conductive material according to the present application has a completely different configuration from a conductive material applied to the positive electrode. That is, the negative electrode conductive material according to the present application serves to capture a contact point between silicon-based active materials in which the volume expansion of the electrode is very large due to charging and discharging, and the positive electrode conductive material serves to impart partial conductivity while playing a buffer role as a cushioning role when roll-pressed, and the configuration and role thereof are completely different from those of the negative electrode conductive material of the present invention.

Further, the negative electrode conductive material according to the present application is applied to a silicon-based active material, and has a completely different configuration from a conductive material applied to a graphite-based active material. That is, the conductive material used for the electrode having the graphite-based active material simply has small particles with respect to the active material, and thus has the characteristics of enhancing the output characteristics and imparting partial conductivity, and the configuration and role thereof are completely different from those of the negative electrode conductive material applied together with the silicon-based active material as in the present invention.

In an exemplary embodiment of the present application, the plate-like conductive material used as the above-described negative electrode conductive material has a structure and a role different from those of a carbon-based active material generally used as a negative electrode active material. Specifically, the carbon-based active material used as the negative electrode active material may be artificial graphite or natural graphite, and means a material that is processed into a spherical or dot shape and used in order to facilitate the storage and release of lithium ions.

In contrast, the plate-like conductive material used as the negative electrode conductive material is a material having a planar or plate-like shape, and may be expressed as plate-like graphite. That is, the plate-like conductive material is a material included to maintain the conductive path in the negative electrode active material layer, and means a material for securing a conductive path in a planar form in the negative electrode active material layer rather than a role of storing and releasing lithium.

That is, in the present application, the fact that plate-like graphite is used as a conductive material means that the plate-like graphite is processed into a planar or plate-like shape and used as a material that secures a conductive path rather than a role of storing or releasing lithium. In this case, the negative electrode active material included together has high capacity characteristics for lithium storage and release, and plays a role capable of storing and releasing all lithium ions transmitted from the positive electrode.

In contrast, in the present application, the fact that a carbon-based active material is used as an active material means that the carbon-based active material is processed into a dot or spherical shape and used as a material that serves to store or release lithium.

In an exemplary embodiment of the present application, the negative electrode binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The negative electrode binder according to an exemplary embodiment of the present application plays a role of supporting the silicon-based active material and the negative electrode conductive material in order to prevent the distortion and structural deformation of the negative electrode structure in the volume expansion and relaxation of the silicon-based active material, and when the above role is satisfied, all general negative electrode binders can be applied, specifically, a water-based binder can be used, and more specifically, a PAM-based binder can be used.

In an exemplary embodiment of the present application, the negative electrode binder may be included in an amount of 30 parts by weight or less, preferably 25 parts by weight or less, and more preferably 20 parts by weight or less, and may be included in an amount of 5 parts by weight or more and 8 parts by weight or more, based on 100 parts by weight of the negative electrode active material layer composition.

When a Si-based material is used in the negative electrode compared to the existing carbon-based negative electrode, a water-based binder is applied by the aforementioned parts by weight, so that a dotted conductive material having a low functional group content can be used, and depending on the feature, the dotted conductive material has hydrophobicity to have a feature in which the bonding strength with the conductive material/binder becomes excellent.

In an exemplary embodiment of the present application, the silicon-based negative electrode may be formed by coating one surface or both surfaces of a negative electrode current collector layer with a negative electrode slurry including the negative electrode active material layer composition.

In an exemplary embodiment of the present application, the negative electrode slurry may include a negative electrode active material layer composition; and a slurry solvent.

In an exemplary embodiment of the present application, a solid content of the negative electrode slurry may satisfy 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean the content of the negative electrode composition contained in the negative electrode slurry, and may mean the content of the negative electrode composition based on 100 parts by weight of the negative electrode slurry.

When the solid content of the negative electrode slurry satisfies the above range, the present invention has a feature capable of efficiently forming a negative electrode active material layer by minimizing the particle aggregation phenomenon of the negative electrode composition because the viscosity is suitable during the formation of the negative electrode active material layer.

In an exemplary embodiment of the present application, the slurry solvent can be used without limitation as long as the slurry solvent can disperse the above-described negative electrode composition, but specifically, water or NMP may be used.

In an exemplary embodiment of the present application, the porosity of the negative electrode active material layer may satisfy a range of 10% or more and 60% or less.

In another exemplary embodiment, the porosity of the negative electrode active material layer may satisfy a range of 10% or more and 60% or less, preferably 20% or more and 50% or less, and more preferably 30% or more and 45% or less.

The porosity varies depending on the composition and content of the silicon-based active material; the conductive material; and the binder, which are included in the negative electrode active material layer, and in particular, as the silicon-based active material; and the conductive material according to the present application are included in a specific composition and content, the above range is satisfied, and accordingly, it is characterized in that electrical conductivity and resistance in the electrode have appropriate ranges.

In an exemplary embodiment of the present application, the positive electrode includes: a positive electrode current collector layer; and a positive electrode active material layer provided on one surface or both surfaces of the positive electrode current collector layer.

In an exemplary embodiment of the present application, the positive electrode active material layer includes a positive electrode active material layer composition, and the positive electrode active material layer composition may include one or more selected from the group consisting of a positive electrode active material; a positive electrode conductive material; and a positive electrode binder.

In the positive electrode, the positive electrode current collector layer is not particularly limited as long as the positive electrode current collector layer has conductivity without causing a chemical change to the battery, and for example, it is possible to use stainless steel, aluminum, nickel, titanium, fired carbon, or a material in which the surface of aluminum or stainless steel is surface-treated with carbon, nickel, titanium, silver, and the like. Alternatively, the positive electrode current collector layer may typically have a thickness of 1 $\mu$m to 500 $\mu$m, and the adhesion to the positive electrode active material may also be enhanced by forming fine irregularities on the surface of the positive electrode current collector layer. For example, the positive electrode current collector layer may be used in various forms such as a film, a sheet, a foil, a net, a porous body, a foam body, and a non-woven fabric body.

An exemplary embodiment of the present application provides a lithium secondary battery, in which the positive electrode and negative electrode current collector layers have a thickness of 1 $\mu$m or more and 100 $\mu$m or less, and the positive electrode and negative electrode active material layers have a thickness of 20 $\mu$m or more and 500 $\mu$m or less.

The positive electrode active material may be a typically used positive electrode active material. Specifically, the positive electrode active material may include one or more selected from the group consisting of $LiNi_xCo_yMn_zO_2$ (x+y+z=1); $LiNi_aCo_bMn_cAl_dO_2$(a+b+c+d=1); $LiMn_2O_4$; $LiNi_{0.5}Mn_{1.5}O_2$; and $LiM_xFe_yPO_4$ (M: a transition metal, x+y=1). In this case, the positive electrode active material is not limited thereto.

Specifically, as the positive electrode active material, NCM or NCMA typically used may be used.

Generally, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2$, and $LiMnO_2$; a lithium copper oxide ($Li_2CuO_2$); a vanadium oxide such as $LiV_3O_8$, $V_2O_5$, and $Cu_2V_2O_7$; a Ni site type lithium nickel oxide expressed as chemical formula $LiNi_{1-c2}M_{c2}O_2$ (here, M is at least any one selected from the group consisting of Co, Mn, Al, Cu, Fe, Mg, B and Ga, and c2 satisfies $0.01 \leq c2 \leq 0.6$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.6$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

In an exemplary embodiment of the present application, the positive electrode active material includes a lithium composite transition metal compound including nickel (Ni), cobalt (Co) and manganese (Mn), the lithium composite transition metal compound includes single particles or secondary particles, and the single particles may have an average particle diameter (D50) of 1 $\mu$m or more.

For example, the single particles may have an average particle diameter (D50) of 1 $\mu$m or more and 12 $\mu$m or less, 1 $\mu$m or more and 8 $\mu$m or less, 1 $\mu$m or more and 6 $\mu$m or less, more than 1 $\mu$m and 12 $\mu$m or less, more than 1 $\mu$m and 8 $\mu$m or less, or more than 1 $\mu$m and 6 $\mu$m or less.

Even though the single particles are formed as small particle diameters having an average particle diameter (D50) of 1 $\mu$m or more and 12 $\mu$m or less, the particle strength may be excellent. For example, the single particles may have a particle strength of 100 to 300 MPa when rolled with a force of 650 kgf/cm$^2$. As a result, even though the single particles are rolled with a strong force of 650 kgf/cm$^2$, a phenomenon in which the number of particulates in the electrode due to cracking of the particles is increased is alleviated, thereby improving the service life characteristics of the battery.

The single particles may be prepared by mixing a transition metal precursor and a lithium raw material and firing the resulting mixture. The secondary particles may be prepared by a different method than the single particles, and the composition thereof may be the same as or different from that of the single particles.

The method of forming the single particles is not particularly limited, but in general, single particles may be formed by increasing the firing temperature to achieve overfiring, and single particles may be prepared by a method of using an additive such as a grain growth promoter that helps overfiring or changing a starting material, and the like.

For example, the firing is performed at a temperature capable of forming single particles. In order to form the single particles, the firing needs to be performed at a temperature higher than that in the preparation of the secondary particles, and for example, when the composition of the precursor is the same, the firing needs to be performed at a temperature about 30°C to 100°C higher than that when the secondary particles are prepared. The firing temperature for forming the single particles may vary depending on the metal composition in the precursor, and for example, when a high-Ni NCM-based lithium composite transition metal oxide having a nickel (Ni) content of 80 mol% or more is desired to be formed as a single particle, the firing temperature may be 700°C to 1000°C, preferably approximately 800°C to 950°C. When the firing temperature satisfies the above range, a positive electrode active material including single particles with excellent electrochemical properties may be prepared. When the firing temperature is less than 790°C, a positive electrode active material including a lithium composite transition metal compound in the form of secondary particles may be prepared, and when the firing temperature exceeds 950°C, the firing may occur excessively, so that a layered crystal structure may not be properly formed, thereby degrading the electrochemical properties.

In the present specification, the single particle is a term used to distinguish single particles from secondary particles formed by aggregation of tens to hundreds of primary particles in the related art, and is a concept including the form of a single particle composed of one primary particle and a pseudo-single particle which is an aggregate of 30 or less primary particles.

Specifically, in the present invention, the single particle may be in the form of a single particle composed of one primary particle or a pseudo-single particle which is an aggregate of 30 or less primary particles, and secondary particles may be in the form of aggregation of several hundred primary particles.

In an exemplary embodiment of the present application, the lithium composite transition metal compound, which is the positive electrode active material, further includes secondary particles, and the average particle diameter (D50) of the single particles is smaller than the average particle diameter (D50) of the secondary particles.

In the present invention, the single particle may be in the form of a single particle composed of one primary particle or a pseudo-single particle which is an aggregate of 30 or less primary particles, and secondary particles may be in the form of aggregation of several hundred primary particles.

The above-described lithium composite transition metal compound may further include secondary particles. A secondary particle refers to a form formed by aggregation of primary particles, and may be distinguished from the concept of a single particle including the form of one primary particle, one single particle or a pseudo-single particle which is an aggregate of 30 or less primary particles.

The secondary particles may have a particle diameter (D50) of 1 $\mu$m to 20 $\mu$m, 2 $\mu$m to 17 $\mu$m, preferably 3 $\mu$m to 15 $\mu$m. The secondary particles may have a specific surface area (BET) of 0.05 $m^2$/g to 10 $m^2$/g, preferably 0.1 $m^2$/g to 1 $m^2$/g, and more preferably 0.3 $m^2$/g to 0.8 $m^2$/g.

In additional exemplary embodiments of the present application, the secondary particle is an aggregate of primary particles, and the primary particles have an average particle diameter (D50) of 0.5 $\mu$m to 3 $\mu$m. Specifically, the secondary particle may be in the form of aggregation of several hundred primary particles, and the primary particles may have an average particle diameter (D50) of 0.6 $\mu$m to 2.8 $\mu$m, 0.8 $\mu$m to 2.5 $\mu$m, or 0.8 $\mu$m to 1.5 $\mu$m.

When the average particle diameter (D50) of the primary particles satisfies the above range, a single particle positive electrode active material with excellent electrochemical properties may be formed. When the average particle diameter (D50) of the primary particles is too small, the number of aggregated primary particles forming the lithium-nickel-based oxide particles increases, so the effect of suppressing the occurrence of particle cracking during rolling is reduced, and when the average particle diameter (D50) of the primary particles is too large, the lithium diffusion path inside the primary particles becomes long, so the resistance increases and the output characteristics may deteriorate.

According to additional exemplary embodiments of the present application, the average particle diameter (D50) of the single particles is characterized by being smaller than the average particle diameter (D50) of the secondary particles. Therefore, even though the single particles are formed of small particle diameters, the single particles may have excellent particle strength, and the excellent particle strength may alleviate a phenomenon in which the number of particulates in the electrode due to cracking of the particles is increased, thereby improving the service life characteristics of the battery.

In an exemplary embodiment of the present application, the average particle diameter (D50) of the single particles is 1 $\mu$m to 18 $\mu$m smaller than the average particle diameter (D50) of the secondary particles.

For example, the average particle diameter (D50) of the single particles may be 1 $\mu$m to 16 $\mu$m smaller, 1.5 $\mu$m to 15 $\mu$m smaller, or 2 $\mu$m to 14 $\mu$m smaller than the average particle diameter (D50) of the secondary particles.

When the average particle diameter (D50) of the single particles is smaller than the average particle diameter (D50) of the secondary particles, for example, when the above range is satisfied, the single particles may have excellent particle strength even though formed with a small particle diameter, and thus, the excellent particle strength alleviates a phenomenon in which the number of particulates in the electrode due to cracking of the particles is increased, so that there is an effect of improving the service life characteristics of the battery and improving the energy density.

According to additional exemplary embodiments of the present application, the single particles are included in an amount of 15 parts by weight to 100 parts by weight based on 100 parts by weight of the positive electrode active material. The single particles may be included in an amount of 20 parts by weight to 100 parts by weight, or 30 parts by weight to 100 parts by weight based on 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more based on 100 parts by weight of the positive electrode active material. The single particles may be included in an amount of 100 parts by weight or less based on 100 parts by weight of the positive electrode active material.

When the single particles within the above range are included, excellent battery characteristics may be exhibited in combination with the above-described negative electrode material. In particular, when the amount of the single particles is 15 parts by weight or more, a phenomenon in which the number of particulates in the electrode due to particle cracking during the rolling process after manufacturing the electrode is increased may be alleviated, thereby improving the service life characteristics of the battery.

In an exemplary embodiment of the present application, the lithium composite transition metal compound may further include secondary particles, and the amount of the secondary particles may be 85 parts by weight or less based on 100 parts by weight of the positive electrode active material. The amount of the secondary particles may be 80 parts by weight or less, 75 parts by weight or less, or 70 parts by weight or less based on 100 parts by weight of the positive electrode active material. The amount of the secondary particles may be 0 parts by weight or more based on 100 parts by weight of the positive electrode active material.

When the above range is satisfied, the above-described effect due to the presence of the positive electrode active material of single particles may be maximized. When the positive electrode active material of the secondary particles is included, the components may be the same as those exemplified as the above-described single particle positive electrode active material, may be different components, and may mean a form of aggregation of single particle forms.

In an exemplary embodiment of the present application, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and even more preferably 98 parts by weight or more and 99.9 parts by weight or less.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

[Mode for Invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

**<Preparation Examples>**

**(1) Manufacture of positive electrode**

As a positive electrode active material, $Li(Ni_aCo_bMn_c)O_2$ was used.

In this case, the NCM of the positive electrode active material except for lithium (Li) and oxygen $(O_2)$ has a ratio of Ni:Co:Mn = 93:5:2, and satisfied the ratio of a:b:c=93:5:2 (a:b:c=0.93:0.05:0.02). Further, D50 is 3.8 $\mu$m, Dmin and Dmax are 1.2 $\mu$m and 13 $\mu$m, the BET specific surface is 0.64 $m^2/g$, and the true density is 4.78 to 4.80 $g/cm^3$.

Moreover, a positive electrode slurry was prepared by adding the positive electrode active material, a positive electrode conductive material (LB.CNT), and a binder (PVdF, KF9700) to a solvent (N-methylpyrrolidone, NMP) at a weight ratio of 97.96:0.8:1.24. A positive electrode was manufactured by applying the positive electrode slurry to an aluminum (Al) thin film, which is a positive electrode current collector having a thickness of 25 $\mu$m, drying the aluminum (Al) thin film, and then rolling the dried aluminum (Al) thin film by a roll press.

**(2) Manufacture of negative electrode**

A negative electrode active material layer composition including Si (average particle diameter (D50): 5 μm) as a silicon-based active material, a first conductive material, a second conductive material, and polyacrylamide as a binder at a weight ratio of 80:9.6:0.4:10 was prepared. A negative electrode slurry was prepared by adding the negative electrode active material layer composition to distilled water as a solvent for forming a negative electrode slurry (solid concentration of 28 wt%).

The first conductive material was plate-like graphite (specific surface area: 17 m$^2$/g, average particle diameter (D50): 3.5 μm), and the second conductive material was carbon nanotubes.

After the first conductive material, the second conductive material, the binder and water were dispersed at 2500 rpm for 30 minutes using a homo mixer as a mixing method, an active material was added thereto, and then the resulting mixture was dispersed at 2500 rpm for 30 minutes to prepare a slurry.

Both surfaces of a copper current collector (thickness: 15 μm) as a negative electrode current collector were coated with the negative electrode slurry in a loading amount of 3.00 mg/cm$^2$, and the copper current collector was roll-pressed and dried in a vacuum oven at 130°C for 10 hours to form a negative electrode active material layer (thickness: 23 μm).

**(3) Manufacture of secondary battery**

An electrode assembly was manufactured by interposing a pressure-resistant thin film separator (PE 12 μm) ceramic coating 3 μm/3 μm between the positive electrode and the negative electrode. After the electrode assembly was placed inside a case, an electrolyte was injected into the case to manufacture a lithium secondary battery.

In this case, the electrolyte satisfied the composition and content shown in the following Table 1.

[Table 1]

| | Content of additive in electrolyte (parts by weight) | Solvent | Lithium salt | Additive | |
|---|---|---|---|---|---|
| | | | | Bifunctional electrolyte additive, (parts by weight) | Additive including two or more fluoro groups (parts by weight) |
| Example 1 | 1 | FEC/DEC=10/90 | 1M LiPF$_6$ | 6-cyano cumarin, 0.5 | Lithium fluoromalonato(difluoro)borate, 0.5 |
| Example 2 | 1 | FEC/DEC=10/90 | 1M LiPF$_6$ | 6-cyano cumarin, 0.5 | Lithium Difluorophosphate, 0.5 |
| Example 3 | 1 | FEC/DEC=10/90 | 1M LiPF$_6$ | 6-cyano cumarin, 0.5 | Lithium difluorobis(oxalato) phosphate, 0.5 |
| Example 4 | 1.4 | FEC/DEC=10/90 | 1M LiPF$_6$ | 6-cyano cumarin, 0.7 | Lithium fluoromalonato(difluoro)borate, 0.7 |
| Comparative Example 1 | 1 | FEC/DEC=10/90 | 1M LiPF$_6$ | 6-cyano cumarin, 1 | - |
| Comparative Example 2 | 1 | FEC/DEC=10/90 | 1M LiPF$_6$ | - | Lithium fluoromalonato(di-fluoro)borate, 1 |
| Comparative Example 3 | - | FEC/DEC=10/90 | 1M LiPF$_6$ | - | - |
| Comparative Example 4 | 3 | FEC/DEC=10/90 | 1M LiPF$_6$ | 6-cyano cumarin, 1.5 | Lithium fluoromalonato(difluoro)borate, 1.5 |
| Comparative Example 5 | 1 | FEC/DEC=10/90 | 1M LiPF$_6$ | 6-cyano cumarin, 0.8 | Lithium fluoromalonato(difluoro)borate, 0.2 |
| Comparative Example 6 | 1 | FEC/DEC=10/90 | 1M LiPF$_6$ | 6-cyano cumarin, 0.2 | Lithium fluoromalonato(difluoro)borate, 0.8 |
| Comparative Example 7 | 1 | FEC/DEC=10/90 | 1M LiPF$_6$ | Propargyl cumarin, 0.5 | Lithium fluoromalonato(difluoro)borate, 0.5 |

**Experimental Example 1: Evaluation of service life**

The lithium secondary batteries including the negative electrodes manufactured in the Examples and the Comparative Examples were subjected to service life evaluation using an electrochemical charger/discharger and the capacity retention rate was evaluated. The secondary batteries were subjected to in-situ cycle test at 4.2-3.2V 1C/1 C, the capacity retention rates were measured by charging/discharging the secondary batteries at 1C/1 C (4.2-3.2V) every 50 cycles during the test, and the results are shown in Table 2.

Service life retention rate (%) = {(Discharge capacity in the Nth cycle)/(Discharge capacity in the 1st cycle)} X 100

**Experimental Example 2: Evaluation of resistance increase rate measurement**

After the capacity retention rates were measured by charging/discharging the secondary batteries at 0.33 C/0.33 C (4.2-3.0 V) every 50 cycles during the test in Experimental Example 1, the resistance increase rates were compared and analyzed by discharging the secondary batteries at 2.5 C pulse in SOC50 to measure the resistance, and the results are shown in the following Table 2.

**Experimental Example 3: Amount of change in volume due to gas generation using pouch test**

For the lithium secondary batteries including the negative electrodes manufactured in the above Examples and Comparative Examples, pouch cells having a capacity of 1 Ah were fully charged to 4.2 V at 0.33 C and then stored in an oven at 60°C for 8 weeks. Thereafter, after full discharge to 2.5 V, quantitative gas analysis was performed by extracting the gas generated within the pouch cell using a GC/MS method, and the results are shown in the following Table 2.

[Table 2]

| | Capa. retention@500th 1C/1C cycle, 4.2-3.2V @25°C | Resistance Increase % @500th 1C/1C cycle, 4.2-3.2V@25°C | Gas volume after storage test (mL/Ah) |
|---|---|---|---|
| Example 1 | 86.1 | 98.0 | 2.5 |
| Example 2 | 87.5 | 82.5 | 2.2 |
| Example 3 | 88.0 | 75.5 | 2.3 |
| Example 4 | 89.5 | 65.0 | 2.1 |
| Comparative Example 1 | 84.0 | 125 | 3.5 |
| Comparative Example 2 | 84.5 | 110 | 3.1 |
| Comparative Example 3 | 81.0 | 160 | 4.0 |
| Comparative Example 4 | 83.5 | 120 | 3.7 |
| Comparative Example 5 | 86.0 | 90 | 3.0 |
| Comparative Example 6 | 85.0 | 89.5 | 3.2 |
| Comparative Example 7 | 86.0 | 100.0 | 2.5 |

The electrolyte according to the present application includes a bifunctional electrolyte additive which can serve to capture a Lewis acid produced by a solvent included in the electrolyte and to form a negative electrode film when the lithium secondary battery is driven. Furthermore, the electrolyte includes an additive including two or more fluoro groups as an additive, such that cell resistance can be maintained and simultaneously, high-temperature cycle performance can be improved.

As described above, it could be confirmed that Examples 1 to 4 have a feature in which by including a specific additive in the electrolyte, it is possible to maintain the cell resistance when a lithium secondary battery is driven, and simultaneously improve high-temperature cycle performance and reduce the amount of gas generated during storage. Specifically, Examples 1 to 3 are cases where all the compositions and contents were the same and only the type of additive including two or more fluoro groups was changed, and Example 4 is a case where the content of additive in the electrolyte corresponds to the the upper limit of the range according to the present application.

Comparative Example 1 and Comparative Example 2 are cases where one of the additives was not used, Comparative Example 3 is a case where the additive itself was not used, and Comparative Example 4 corresponds to a case where an excessive amount of additive was used. In this case, when compared with the Examples, it could be confirmed that the capacity retention rate was reduced, the resistance increase rate was high, and the cycle performance deteriorated due to a large amount of gas generated.

Comparative Examples 5 and 6 correspond to cases where the additive was appropriately included in an amount of 1 part by weight or less, but the proportion of the additive was out of the range according to the present application. It can be confirmed that the performance also deteriorated when compared with the Examples. That is, it could be confirmed that when the weight ratio is out of the above ratio, the cell resistance becomes too high, and when the additive including two or more fluoro groups is used out of the above range due to its low solubility, the performance of the lithium secondary battery deteriorates because the elution phenomenon in the electrolyte solution occurs.

Comparative Example 7 corresponds to a case where an additive having a propargyl group and a coumarin group was used instead of an additive having a cyano group and a coumarin functional group. In this case, it could be confirmed that when compared with the Examples, the room temperature service life durability can be the same, but by applying the propargyl group, the initial resistance increased compared to when the cyano group was applied, and thus, the performance of the lithium secondary battery deteriorated. That is, it could be confirmed that as the present application includes a specific functional group as a functional group, the performance is better than in Comparative Example 7 because it is possible to serve to capture a Lewis acid produced by a solvent included in the electrolyte and to form a negative electrode film.

**Claims**

1.  A lithium secondary battery comprising:

    a positive electrode;
    a silicon-based negative electrode;
    a separator provided between the positive electrode
    and the negative electrode; and
    an electrolyte,
    wherein the silicon-based negative electrode comprises a negative electrode current collector layer; and a negative electrode active material layer provided on one surface or both surfaces of the negative electrode current collector layer,
    the negative electrode active material layer comprises a negative electrode active material layer composition,
    the negative electrode active material layer composition comprises a silicon-based active material, and the silicon-based active material comprises one or more selected from the group consisting of SiOx, wherein x=0, SiOx, wherein 0<x<2, SiC, and a Si alloy,
    the electrolyte comprises an additive,
    the additive comprises: a bifunctional electrolyte additive; and an additive comprising two or more fluoro groups,
    the bifunctional electrolyte additive comprises a cyano group and a coumarin group as functional groups, and
    45 parts by weight or more and 55 parts by weight or less of the bifunctional electrolyte additive; and 45 parts by weight or more and 55 parts by weight or less of the additive comprising two or more fluoro groups are comprised based on 100 parts by weight of the additive.

2.  The lithium secondary battery of claim 1, wherein the silicon-based active material comprises one or more selected from the group consisting of SiOx, wherein x=0, SiOx, wherein 0<x<2, and metal impurities, and comprises the SiOx, wherein x=0, in an amount of 70 parts by weight or more based on 100 parts by weight of the silicon-based active material.

3.  The lithium secondary battery of claim 1, wherein the silicon-based active material is comprised in an amount of 60 parts by weight or more based on 100 parts by weight of the negative electrode active material layer composition.

4.  The lithium secondary battery of claim 1, wherein the electrolyte further comprises one or more selected from the group consisting of a solvent; and a lithium salt.

5.  The lithium secondary battery of claim 1, wherein the additive is comprised in an amount of 5 parts by weight or less based on 100 parts by weight of the electrolyte.

6.  The lithium secondary battery of claim 1, wherein the weight ratio of the electrolyte additive:the additive comprising two or more fluoro groups is 1:1.

7. The lithium secondary battery of claim 1, wherein the additive comprising two or more fluoro groups is a lithium borate salt comprising two or more fluoro groups; or a lithium phosphate salt comprising two or more fluoro groups.

8. The lithium secondary battery of claim 4, wherein the solvent is a carbonate-based mixed solvent.

9. The lithium secondary battery of claim 1, wherein the positive electrode comprises a positive electrode current collector layer; and a positive electrode active material layer provided on one surface or both surfaces of the positive electrode current collector layer,

the positive electrode active material layer comprises a positive electrode active material layer composition, the positive electrode active material layer composition comprises a positive electrode active material, and the positive electrode active material comprises one or more selected from the group consisting of $LiNi_xCo_yMn_zO_2$ (x+y+z=1); $LiNi_aCo_bMn_cAl_dO_2$ (a+b+c+d=1); $LiMn_2O_4$;

$LiNi_{0.5}Mn_{1.5}O_2$; and $LiM_xFe_yPO_4$ (M: a transition metal, x+y=1).

10. The lithium secondary battery of claim 1, wherein the positive electrode and negative electrode current collector layers have a thickness of 1 $\mu$m or more and 100 $\mu$m or less, and
the positive electrode and negative electrode active material layers have a thickness of 20 $\mu$m or more and 500 $\mu$m or less.

[Figure 1]

## INTERNATIONAL SEARCH REPORT

| International application No. |
| --- |
| **PCT/KR2023/021519** |

**A. CLASSIFICATION OF SUBJECT MATTER**

**H01M 10/0567**(2010.01)i; **H01M 10/42**(2006.01)i; **H01M 10/0569**(2010.01)i; **H01M 10/058**(2010.01)i;
**H01M 10/052**(2010.01)i; **H01M 4/38**(2006.01)i; **H01M 4/48**(2010.01)i; **H01M 4/525**(2010.01)i; **H01M 4/505**(2010.01)i;
**H01M 4/02**(2006.01)i

According to International Patent Classification (IPC) or to both national classification and IPC

**B. FIELDS SEARCHED**

Minimum documentation searched (classification system followed by classification symbols)

H01M 10/0567(2010.01); H01M 10/052(2010.01); H01M 10/0525(2010.01); H01M 10/0565(2010.01);
H01M 10/0587(2010.01); H01M 10/42(2006.01); H01M 4/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 실리콘계 음극 활물질(silicon-based anode active material), 전해질(electrolyte), 첨가제(additive), 시아노(cyano), 쿠마린(coumarin), 플루오로(fluoro)

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2021-0060330 A (LG CHEM, LTD.) 26 May 2021 (2021-05-26)<br>See claims 1 and 9; and paragraphs [0089], [0091] and [0095]. | 1-10 |
| A | KR 10-2020-0072723 A (HYUNDAI MOTOR COMPANY et al.) 23 June 2020 (2020-06-23)<br>See claims 1-2; and paragraphs [0004], [0016] and [0020]-[0021]. | 1-10 |
| A | CN 102569889 A (SHENZHEN CAPCHEM TECHNOLOGY CO., LTD.) 11 July 2012 (2012-07-11)<br>See entire document. | 1-10 |
| A | US 2017-0077549 A1 (SAMSUNG ELECTRONICS CO., LTD. et al.) 16 March 2017 (2017-03-16)<br>See entire document. | 1-10 |
| A | KR 10-2009-0027497 A (SAMSUNG SDI CO., LTD.) 17 March 2009 (2009-03-17)<br>See entire document. | 1-10 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 April 2024** | **15 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/021519**

**C.    DOCUMENTS CONSIDERED TO BE RELEVANT**

| Category* | Citation of document, with indication, where appropriate, of the relevant passages | Relevant to claim No. |
|---|---|---|
| E | KR 10-2024-0025491 A (LG ENERGY SOLUTION, LTD.) 27 February 2024 (2024-02-27) See claims 1-10 and 13; and paragraphs [0053], [0081] and [0171]-[0183]. | 1-10 |

**INTERNATIONAL SEARCH REPORT**
**Information on patent family members**

International application No.

**PCT/KR2023/021519**

| Patent document cited in search report | | | Publication date (day/month/year) | Patent family member(s) | | | Publication date (day/month/year) |
|---|---|---|---|---|---|---|---|
| KR | 10-2021-0060330 | A | 26 May 2021 | CN | 113767502 | A | 07 December 2021 |
| | | | | EP | 3951990 | A1 | 09 February 2022 |
| | | | | JP | 2022-534525 | A | 01 August 2022 |
| | | | | JP | 7301449 | B2 | 03 July 2023 |
| | | | | US | 2022-0209299 | A1 | 30 June 2022 |
| | | | | WO | 2021-101174 | A1 | 27 May 2021 |
| KR | 10-2020-0072723 | A | 23 June 2020 | US | 2020-0194838 | A1 | 18 June 2020 |
| CN | 102569889 | A | 11 July 2012 | | None | | |
| US | 2017-0077549 | A1 | 16 March 2017 | EP | 3145020 | A1 | 22 March 2017 |
| | | | | EP | 3145020 | B1 | 09 October 2019 |
| | | | | JP | 2017-059532 | A | 23 March 2017 |
| | | | | JP | 6966188 | B2 | 10 November 2021 |
| | | | | KR | 10-2017-0032773 | A | 23 March 2017 |
| | | | | KR | 10-2587533 | B1 | 12 October 2023 |
| | | | | US | 9905884 | B2 | 27 February 2018 |
| KR | 10-2009-0027497 | A | 17 March 2009 | CN | 101388475 | A | 18 March 2009 |
| | | | | CN | 101388475 | B | 09 May 2012 |
| | | | | KR | 10-0898290 | B1 | 18 May 2009 |
| | | | | US | 2009-0068565 | A1 | 12 March 2009 |
| | | | | US | 8557447 | B2 | 15 October 2013 |
| KR | 10-2024-0025491 | A | 27 February 2024 | US | 2024-0088440 | A1 | 14 March 2024 |
| | | | | WO | 2024-039232 | A1 | 22 February 2024 |

Form PCT/ISA/210 (patent family annex) (July 2022)

**EP 4 546 492 A1**

**Patent documents cited in the description**

- KR 1020220187442